Europäisches Patentamt

European Patent Office

Office européen des brevets

(11) Veröffentlichungsnummer: **0 170 806**
**A1**

## (12) EUROPÄISCHE PATENTANMELDUNG

(21) Anmeldenummer: 85106329.7

(22) Anmeldetag: 23.05.85

(51) Int. Cl.⁴: **A 61 C 11/00**

(30) Priorität: 28.06.84 DE 3423739
18.10.84 DE 3438182

(43) Veröffentlichungstag der Anmeldung: 12.02.86
Patentblatt 86/7

(84) Benannte Vertragsstaaten: **DE FR GB IT SE**

(71) Anmelder: **Körner, Rudi, Elisabethenstrasse 41,
D-7080 Aalen-Unterkochen (DE)**

(72) Erfinder: **Körner, Rudi, Elisabethenstrasse 41,
D-7080 Aalen-Unterkochen (DE)**

(74) Vertreter: **Lorenz, Werner, Dipl.-Ing., Fasanenstrasse 7,
D-7920 Heidenheim (DE)**

(54) **Artikulator.**

(57) Ein Artikulator zur Anfertigung einer Zahnprothese ist mit einem Unterkiefermodell (7) und Oberkiefermodellen (6) versehen, die auf Modelltragplatten (3, 9) befestigt und zueinander beweglich an einem Gestell mit einer Grundplatte (1) angeordnet sind. Das Oberkiefermodell (6) ist direkt oder über eine Modelltragplatte (3) fest an einem mit der Grundplatte (1) über Träger (2) verbundenen Gestelloberteil angeordnet. Das Unterkiefermodell (7) ist beweglich mit einem Gestellteil verbunden und im hinteren Bereich des Unterkiefermodelles (7) oder einer damit verbundenen Modelltragplatte (9) ist an beiden Seiten jeweils ein nach oben ragender Führungsarm (10) angeordnet, dessen oberes Ende in einer an einem Gestellteil fest angeordneten Gelenkgrube (15) geführt ist.

0170806

PATENTANWALT

DIPL.-ING. WERNER LORENZ

Fasanenstr. 7

D-7920 Heidenheim

04.04.1985 hf

Akte: KOE 1290 I

Anmelder:

=========

Rudi Körner

Elisabethenstraße 41

7080 Aalen-Unterkochen

— 1 —

Artikulator

Die Erfindung betrifft einen Artikulator zur Anfertigung einer Zahnprothese mit auf Modelltragplatten befestigten Unterkiefer- und Oberkiefermodellen, die zueinander beweglich an einem Gestell mit einer Grundplatte befestigt sind.

Ein Artikulator dient dazu, die Kieferbewegungen zu simulieren. Er wird z.B. von einem Zahntechniker benötigt, um anhand eines Modelles eine Zahnprothese herzustellen.

Bei den bekannten Artikulatoren ist das Unterkiefermodell im allgemeinen über eine Modelltragplatte fest in dem Gestell

-...-

angeordnet. Das in einer oberen Modelltragplatte befestigte Oberkiefermodell hingegen ist über eine gelenkige Verbindung, die jedoch nur eine lineare Verschiebung zuläßt, an dem Gestell angeordnet. Weiterhin ist an der oberen Modelltragplatte im allgemeinen ein Schneidezahnführungsstift, ein sogenannter Inzisalstift befestigt, der an der Vorderseite nach unten ragt und auf einem Führungsteller, der Inzisalplatte, geführt ist. Durch ein entsprechendes Bewegen des Inzisalstiftes auf der Inzisalplatte, wird das Oberkiefermodell gegen das Unterkiefermodell verschoben, wodurch zusammen mit dem Gelenkteil Kaubewegungen simuliert werden.

Nachteilig dabei ist jedoch, daß diese Bewegung anatomisch falsch ist, denn der Mensch bewegt bei Kieferbewegungen den Unterkiefer gegenüber dem Oberkiefer, während dieser hingegen unbeweglich bleibt. Weiterhin ist die Bewegung des Unterkiefers nicht linear, sondern die Bewegung erfolgt auf einer ungefähr S-förmig verlaufenden Bahn.

Von Nachteil ist weiterhin, daß der auf der Vorderseite nach unten ragende Inzisalstift bei Arbeiten stört.

Der vorliegenden Erfindung liegt daher die Aufgabe zugrunde, einen Artikulator der eingangs erwähnten Art zu schaffen, der bei einem einfachen und praktischen Aufbau eine die natürliche Kieferbewegung besser simulierende Bewegbarkeit be-

-...-

0170806

sitzt, wobei er in großen Maße an unterschiedliche Kiefer-
und Gebißformen anpassbar ist.

Erfindungsgemäß wird diese Aufgabe durch die im kennzeichnenden Teil von Anspruch 1 genannten Merkmale gelöst.

Durch diese Ausgestaltung wird die natürliche Bewegung des
Kiefers wesentlich besser simuliert, denn nunmehr wird statt
dem Oberkiefermodell das Unterkiefermodell bewegt. Die Bewegung wird dabei durch die beiden Führungsarme über die beiden Gelenkgruben gesteuert. Die beiden Gelenkgruben können
dabei problemlos der Form der Gelenkgrube im menschlichen
Kopf angenähert werden. Auf diese Weise ergibt sich eine
weitgehend natürliche Bewegung, wobei der Artikulator einfach und praktisch aufgebaut ist.

In weiterer Ausgestaltung kann vorgesehen sein, daß das Unterkiefermodell oder die Modelltragplatte im hinteren Bereich über ein elastisches Glied mit dem Gestellteil verbunden ist. Zum Bewegen des Unterkiefers können nach oben
ragende Hebel vorgesehen sein, welche vor den Führungsarmen
liegen. Sie können als Angriffsstellen für die Finger einer
Bedienungsperson dienen. Die beiden nach oben ragenden Hebel
sind ebenso wie die beiden Führungsarme weitgehende Nachahmungen der menschlichen Kieferform, wodurch sie der Forderung nach einer guten Simulationsbewegung nachkommen.

-....-

Als elastisches Glied können z.B. Federn zwischen der oberen und unteren Modelltragplatte eingespannt werden.

Ein einfacher Aufbau des Artikulators ist gegeben, wenn die Grundplatte im hinteren Bereich mit zwei seitlichen Stützen versehen ist, auf deren oberen Enden sich als Gelenkoberteil die obere Modelltragplatte, welche frei auskragend nach vorne ragt, mit einem hinteren Querbalken abstützt. Dabei können die beiden Gelenkgruben seitlich unter der oberen Modelltragplatte befestigt sein, wobei sie im Bedarfsfalle auch noch auswechselbar angeordnet sein können.

Auf diese Weise läßt sich der Artikulator noch stärker an die jeweiligen Besonderheiten bzw. die anzufertigende Prothese anpassen. Hierzu ist es lediglich erforderlich, daß z.B. beim Zahnarzt die Kieferform des Patienten entsprechend vermessen wird. Insbesondere gilt dies für die Gelenkbahnneigungen. Ist dem Benützer des Artikulators dann die Kieferform, insbesondere die Gelenkbahnneigung bekannt, so kann er eine entsprechende Gelenkgrube in den Artikulator einsetzen.

Zur genauen Ausrichtung der Gelenkgruben ist es von Vorteil, wenn diese durch eine Verdreh- und Festklemmeinrichtung jeweils um eine vertikale Achse verschwenkbar sind. Dadurch ist die Einstellung des Bennetwinkels möglich.

Hierzu sind verschiedene Einrichtungen denkbar. In einfacher Weise ist vorgesehen, daß die Verdreh- und Festklemmeinrichtung eine in dem Querbalken gelagerte und von oben in die Gelenkgrube geschraubte Einstellschraube und einen vertikalen außerhalb der Drehachse in der Gelenkgrube befestigten und aus einem Schlitz des Querträgers ragenden Anzeigestift aufweist.

Zeichnet man auf der Oberseite entlang dem bogenförmigen Schlitz Gradangaben für Winkel ein, so lassen sich die Gelenkgruben sehr genau einjustieren.

Um Retrosionsbewegungen zu ermöglichen, kann vorgesehen sein, daß im hinteren Bereich der Gelenkgrube ein in die Laufbahn der Gelenkgrube ragendes in horizontaler Richtung verschiebbares Einstellglied, z.B. eine Einstellschraube, angeordnet ist, dessen vorderes, in die Laufbahn ragendes Ende wenigstens annähernd der Kontur der Laufbahn angepasst ist.

Durch entsprechende Verschiebungen der Einstellschraube, welche damit mehr oder weniger tief in die Laufbahn eingeschoben werden kann, können beliebige Retrusionsbewegungen simuliert werden.

-...-

Eine weitere sehr vorteilhafte und nicht naheliegende Weiterbildung der Erfindung besteht darin, daß auf der oberen Modelltrageplatte oder einem damit verbundenen Teil ein Führungsteller für einen Schneidezahnführungsstift befestigt ist, wobei der Schneidezahnführungsstift durch eine Aussparung in der oberen Modelltragplatte im hinteren Bereich nach unten zu der unteren Modelltragplatte oder einem damit verbundenen Teil geführt ist.

Durch diese erfindungsgemäße Ausgestaltung bleibt die Vorderseite des Artikulators frei zugänglich, denn der Schneidezahnführungsstift wird erst im hinteren Bereich nach unten zu der unteren Modelltragplatte geführt. Weiterhin hat diese Ausgestaltung den Vorteil, daß die Bewegung des Unterkiefermodelles über diesen Schneidezahnführungsstift natürlicher ist. (Bonwillsches Dreieck).

Bei den bekannten Anordnungen ist der Schneidezahnführungsstift zu weit vorne angeordnet, wodurch die Kinematik nach dem Bonwillschen Dreieck kaum mehr erfüllt ist. Der am vorderen Ende des Schneidezahnführungsstiftes rechtwinklig dazu liegende Markierungsdorn wird auf dem Führungsteller entlang geführt, was entweder von unten oder von oben erfolgen kann.

Dabei kann der hintere, vertikal nach unten verlaufende Ab-

0170806

schnitt des Schneidezahnführungsstiftes an einem Querträger zwischen den beiden Führungsarmen befestigt sein. Durch den Querträger wird die Einrichtung selbst damit zusätzlich noch stabiler.

In vorteilhafter Weise wird man zwischen dem horizontalen Abschnitt des Schneidezahnführungsstiftes und dem vertikalen Abschnitt ein Gelenk anordnen. Dadurch ergibt sich eine größere Beweglichkeit und die obere und die untere Modelltragplatte mit ihren Modellen können relativ zueinander verschwenkt werden, wodurch ein leichteres Arbeiten möglich wird.

Das elastische Glied zwischen der unteren und der oberen Modelltragplatte kann ein oder mehrere Federn aufweisen. In vorteilhafter Weise ist eine Feder im mittleren Bereich angeordnet und mit einem Ende an einem Teil des Querträgers und mit dem anderen Ende an dem horizontalen Abschnitt des Schneidezahnführungsstiftes befestigt. An dieser Stelle ist die Feder nicht störend.

Zur Anpressung der oberen Enden der Führungsarme an die Laufbahnen der Gelenkgruben kann eine federartige Einrichtung vorgesehen sein, die zwischen die Führungsarme oder damit verbundene Teile und einen Teil des Gestelloberteiles gespannt ist.

-...-

So können z.B. an beiden Seiten im Bereich der Gelenkgruben auf der Rückseite angeordnete Federn gespannt werden, welche damit die Führungsarme von unten her in die Gelenkgruben pressen.

In vorteilhafter Weise kann vorgesehen sein, daß die federartige Einrichtung einen an einem auf dem Gestelloberteil angeordneten Halteglied befestigter Stift, ein Draht, eine Schnur oder dgl. aufweist, der durch je eine Bohrung in dem Gestelloberteil und der Gelenkgrube geführt und mit einem verdickten Ende in einer Stufenbohrung in dem Führungsarm befestigt ist, wobei das Halteglied durch eine Feder gegen den Führungsarm vorgespannt ist.

Im Gegensatz zu einer Anordnung der Federn auf der Rückseite des Artikulators werden durch die vorstehend genannte Verbindung schräge Zugkräfte vermieden und der Artikulator wird damit leichtgängiger.

Dabei kann vorgesehen sein, daß die Höhe der Anpressung einstellbar ist. Dies kann z.B. durch ein entsprechendes Einstellen der Federvorspannkraft erreicht werden. Hierzu können z.B. Unterlegscheiben verschiedener Dicke oder verschiedene Federn verwendet werden. Ebenso kann die Feder bzw. das Halteglied in einer Nachstelleinrichtung, z.B. einer Nach-

-...-

stellschraube, angeordnet sein.

Damit bestimmte Arbeiten leichter durchgeführt werden können, kann zur besseren Zugänglichkeit vorgesehen sein, daß
das Gestell nach hinten kippbar mit der Grundplatte verbunden ist. Hierzu können z.B. die beiden Träger über ein Kippgelenk mit der Grundplatte verbunden sein. Auf diese Weise
können das Oberkiefer- und das Unterkiefermodell nach hinten
gekippt werden und sind damit von oben leichter zugänglich.

Nachfolgend ist ein Ausführungsbeispiel der Erfindung, aus
dem weitere erfindungsgemäße Merkmale hervorgehen, prinzipmäßig beschrieben.

Es zeigt:

Fig. 1: eine Seitenansicht des erfindungsgemäßen Artikulators,

Fig. 2: eine Vorderansicht des Artikulators (aus Übersichtlichkeitsgründen ohne Ober- und Unterkiefermodell),

Fig. 3: eine Draufsicht auf den Artikulator,

Fig. 4: eine Ausschnittvergrößerung nach dem Kreis A in der

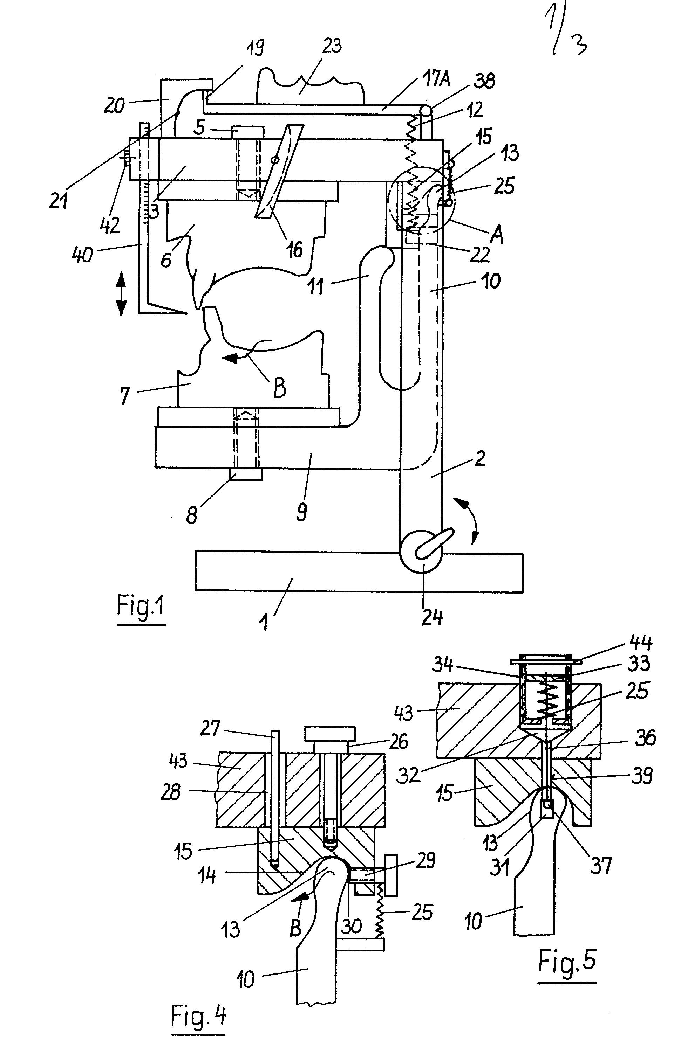

        Fig. 1 ohne den Träger mit einer Gelenkgrube und dem

-...-

oberen Bereich eines Führungsarmes,

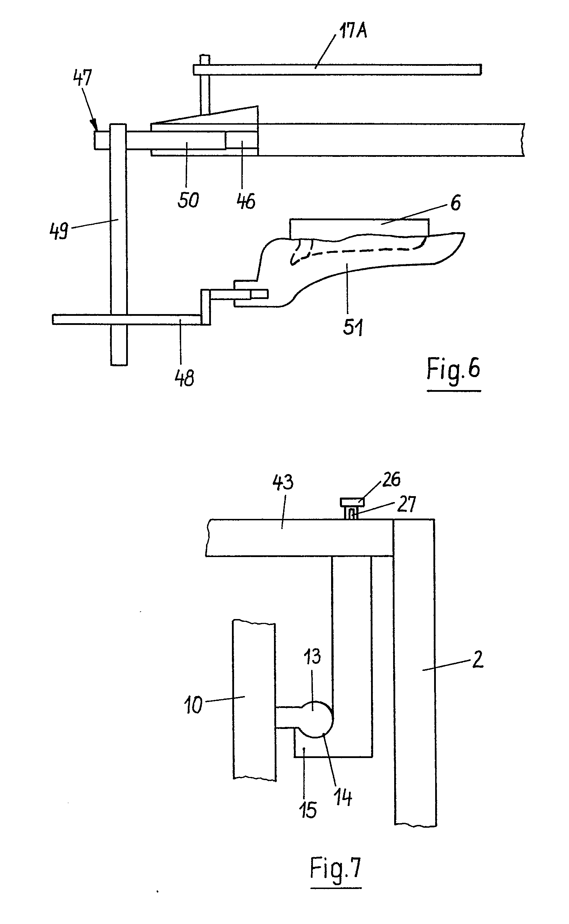

Fig. 5: eine Ausschnittsvergrößerung entsprechend der nach
der Fig. 4 mit einer anderen Anpreßeinrichtung der
Führungsarme in die Gelenkgruben,

Fig. 6: eine Seitenansicht einer anderen Ausgestaltung des
vorderen Endes eines Schneidezahnführungsstiftes.

Fig. 7: Ausschnittsdarstellung mit einer anderen Anordnung
der Gelenkgruben.

Der Artikulator weist ein Gestell mit einer Grundplatte 1
auf, von der aus seitlich zwei Träger 2 nach oben ragen. An
den oberen Enden der beiden Träger 2 ist als Gestelloberteil
eine obere Modelltragplatte 3 mit einem Querbalken 43 befestigt, welche frei auskragend nach vorne ragt. Die Modelltragplatte 3 ist mit einem Längsschlitz 4 versehen, durch
den eine Schraube 5 gesteckt ist. Über die Schraube 5 wird
ein Oberkiefermodell 6 von unten her an der Modelltragplatte
3 befestigt. Ein Unterkiefermodell 7 ist ebenfalls über eine
Schraube 8, welche in einem Langloch in einer Modelltragplatte 9 angeordnet ist, mit der Modelltragplatte 9 verbunden.

Die Modelltragplatte 9 weist auf ihrer Rückseite auf jeder

-...:-

Seite einen nach oben gerichteten Führungsarm 10 und einen Hebel 11 auf, wobei der Hebel 11 etwas vor dem Führungsarm 10 liegt. Die beiden Hebel 11 dienen zum Bewegen der unteren Modelltragplatte 9. Das obere freie Ende jedes Führungsarmes 10 ist mit einem abgerundeten Kopf 13 versehen, der aufgrund der Zugspannung von elastischen Gliedern mit nach oben gerichteten Kräften in einer Laufbahn 14 einer Gelenkgrube 15 angepresst wird. Die Gelenkgrube 15 ist auswechselbar an der Unterseite der oberen Modelltragplatte 3 befestigt.

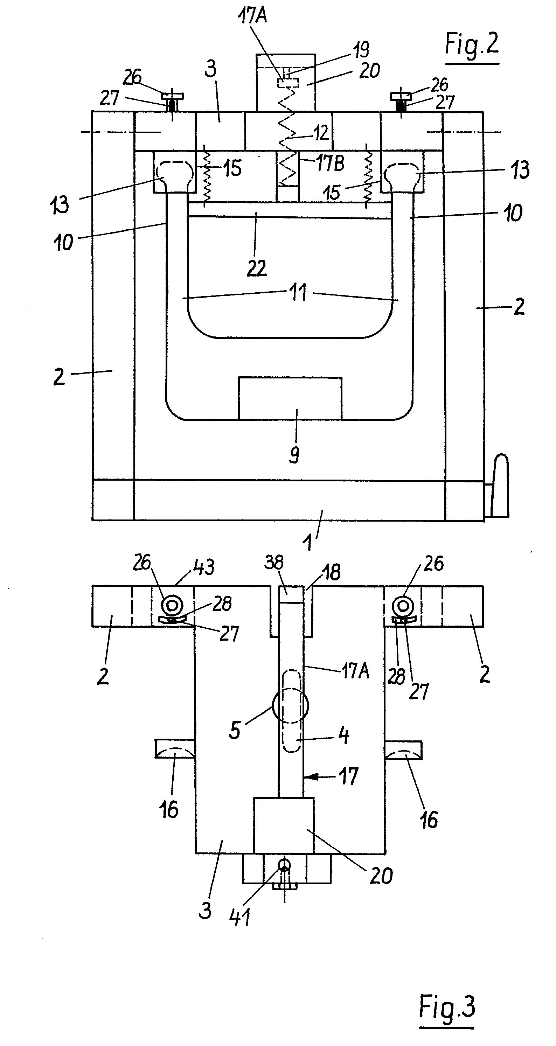

Wie insbesondere aus den Figuren 3 und 4 ersichtlich ist, ist die Gelenkgrube 15 mit der oberen Modelltragplatte 3 bzw. dem Querbalken 43 über eine Einstellschraube 26 verbunden. Hierzu ist die Einstellschraube 26 durch eine Bohrung in dem Querbalken 43 gesteckt und in eine Gewindebohrung in der Gelenkgrube 15 eingeschraubt.

Außermittig dazu ist ein Anzeigestift 27 ebenfalls in eine Bohrung in die Gelenkgrube 15 eingesetzt. Der Anzeigestift 27 ragt durch einen bogenförmigen Schlitz 28 in dem Querbalken 43 über diesen nach oben heraus. Nach einem Lockern der Einstellschraube 26 kann durch ein entsprechendes Bewegen des Anzeigestiftes 27 die Gelenkgrube um eine vertikale Achse, welche durch die Längsachse der Einstellschraube führt, verschwenkt werden. Zur genauen Einstellung kann auf der Oberseite des Querbalken 43 hierzu neben dem bogenförmigen Schlitz 28 eine Winkeleinteilung angeordnet sein.

Wie aus der Fig. 4 weiter ersichtlich ist, ist im hinteren Bereich der Gelenkgrube 15 ein Einstellglied, nämlich eine Einstellschraube 29 in einer Gewindebohrung angeordnet. Das vordere Ende 30 der Einstellschraube ragt in die Laufbahn 14 der Gelenkgrube und ist in seiner Form wenigstens annähernd der Kontur dieser Laufbahn angepaßt. Durch ein entsprechendes Einschrauben oder auch Herausschrauben lassen sich Retrusionsbewegungen mit dem Unterkiefermodell durchführen.

Als elastisches Glied zur Anpressung des Kopfes 13 des Führungsarmes 10 dient eine Feder 25 auf jeder Seite, welche mit einem Ende im oberen Bereich des Führungsarmes 10 befestigt ist, während das andere Ende an einem Teil der oberen Modelltragplatte 3, des Querbalken 43 oder - wie in der Fig. 4 dargestellt - an der Einstellschraube 29 oder an der Gelenkgrube 15 befestigt ist.

In der Fig. 5 ist eine Anpressung des Kopfes 13 an die Laufbahn 14 der Gelenkgrube 15 dargestellt, bei der durch die Anordnung der Feder 25 kein Schrägzug erfolgt. Außerdem läßt sich durch diese Anordnung auf einfache Weise die Federvorspannung einstellen. Wie ersichtlich weist hierzu der Gelenkkopf 13 eine Stufenbohrung 31 auf, wobei der kleinere Bohrungsdurchmesser sich auf der Oberseite des Kopfes 13 öffnet. In der Gelenkgrube 15 befindet sich eine zu der Stufenbohrung 31 fluchtende Durchgangsbohrung 39. In dem Querbalken 43 befindet sich ebenfalls eine damit fluchtende Bohrung 32 in der - entsprechend vergrößert und mit einem Gewinde versehen - eine Nachstellschraube 34 sitzt. Die Nachstellschraube 34 besitzt einen freien Innenraum und ist unten offen. In ihrem Inneren ist axial zu ihrer Längsachse frei beweglich eine Abdeckplatte 33 als Halteglied angeordnet. An der Abdeckplatte ist ein Stift, eine Feder, ein Draht 36 o.dgl. befestigt, dessen anderes Ende eine Verdickung 37 besitzt, welche dicker ist als der kleinere Durchmesser der Stufenbohrung 31. Die Nachstellschraube 34 weist auf der Unterseite noch einen Absatz auf. Im Inneren zwischen der Abdeckplatte 33 und diesem Absatz ist die Feder 25 gespannt, welche dadurch die Anpressung des Führungsarmes 11 an die Laufbahn der Gelenkgrube 15 erzeugt. Zum Nachstellen muß lediglich die Nachstellschraube 34 entsprechend verdreht werden, wobei ein Quersplint 44 im oberen Bereich der Nachstellschraube 34 dafür sorgt, daß die Abdeckplatte 33 nicht herausfällt.

Selbstverständlich sind jedoch auch noch andere Befestigungsmöglichkeiten für die Feder 25 und den Draht 36 gegeben. Maßgebend ist lediglich, daß ein Zug wenigstens annähernd senkrecht über dem Führungsarm 11 nach oben erzeugt wird, wobei die Zugkraft evtl. einstellbar sein sollte. Im Bedarfsfalle kann auch die Einstellschraube 26 nach Fig. 4 in diese Einrichtung mit integriert werden.

Die Federn 25 können auch seitlich innen neben den Gelenkgruben 15 zwischen die obere Modelltragplatte 3 und den Querträger 22 gespannt sein (in der Fig. 2 gestrichelt dargestellt), wodurch kein Schrägzug entsteht.

Statt einer Zugfeder 25 kann selbstverständlich im Rahmen der Erfindung auch eine Druckfeder verwendet werden. Zur Einführung der Verdickung 37 in die Stufenbohrung 31 kann der Kopf 13 seitlich mit einem Schlitz versehen sein, der bis in die Stufenbohrung 31 ragt (nicht dargestellt).

Bei einer entsprechenden Ausgestaltung kann diese Einrichtung auch die Einstellschraube 26 zum Verschwenken der Gelenkgrube um eine vertikale Achse ersetzen.

Eine weitere Feder 12 zur elastischen Verbindung der unteren Modelltragplatte 9 mit der oberen Modelltragplatte 3 ist an einem horizontalen Querträger 22, der zur Verbindung der beiden Führungsarme 10 und dessen Stabilisierung dient, mit ihrem unteren Ende befestigt. Das obere Ende ist an einem Schneidezahnführungsstift 17, welcher nachfolgend noch näher beschrieben wird, verankert.

Ordnet man an der oberen Modelltragplatte 3 seitlich jeweils eine Daumenschale 16 an, so läßt sich der Unterkiefer auf einfache und weitgehend natürliche Weise gegenüber dem Oberkiefermodell 6 bewegen. Hierzu ist es lediglich erforderlich, daß die beiden Daumen jeder Hand in die Daumenschale 16 gelegt werden, während jeweils ein Zeigefinger oder Mittelfinger an den beiden Hebeln 11 angelegt und damit entsprechende Bewegungen durchgeführt werden. Die Bahn 14 der Gelenkgrube 15 ist dabei - wie insbesondere aus der Fig. 4 ersichtlich ist - der Form der menschlichen Gelenkgrube im Kopf weitgehend angepaßt. Bei einem Bewegen des Unterkiefermodelles 7 durch eine entsprechende Verschiebung über die beiden Hebel 11 muß zwangsläufig diese Unterkieferbewegung der Laufbahn 14 und damit der natürlichen Kaubewegung folgen.

Zusätzlich kann der Artikulator auch noch mit einem Schneidezahnführungsstift 17 versehen sein, der über eine Aussparung 18, welche im Bedarfsfalle auch eine entsprechende Verlängerung des Längsschlitzes 4 sein kann, von unten her durch die obere Modelltragplatte 3 gesteckt ist. Der Schneidezahnführungsstift 17 besteht aus einem unteren vertikalen Abschnitt 17B, und einem oberen horizontalen Abschnitt 17A, an dessen vorderem Ende eine vertikal dazu liegende Spitze 19 angeordnet ist. Oberhalb der Modelltragplatte 3 verläuft - wie ersichtlich - der Schneidezahnführungsstift 17 paral-

-...-

lel zu der Modelltragplatte 3 nach vorne, wo er in der vertikalen Spitze 19 endet. Die vertikale Spitze 19 ist in einem Führungsteller 20 geführt, der auf der Oberseite der Modelltragplatte 3 befestigt ist. Der Führungsteller 20 weist ebenfalls auf der Innenseite eine Kurvenbahn 21 auf, die der Zahnform auf der Innenseite eines Schneidezahnes entspricht. Der Führungsteller kann, wie aus der Fig. 1 ersichtlich, so angeordnet sein, daß die Spitze von unten her an der Kurvenbahn 21 entlang geführt wird. Diese Ausgestaltung entspricht der natürlichen Bewegung entlang eines Schneidezahnes. Nachteilig dabei ist jedoch, daß die Bedienungsperson von vorne nicht genau ersehen kann, ob die Spitze 19 genau auf der Kurvenbahn 21 verläuft, sofern nicht irgendwelche Maßnahmen für einen Einblick von vorne vorgesehen sind, oder der Führungsteller 20 aus durchsichtigem Material besteht.

In der Fig. 6 ist hierzu eine Alternativlösung angegeben, wobei der Führungsteller 20 spiegelbildlich zu dem in der Fig. 1 dargestellten Führungsteller liegt. In diesem Falle ragt die Spitze 19 nach unten, damit sie auf der Kurvenbahn 21 des Führungstellers 20 geführt werden kann. Bei dieser Ausgestaltung kann die Bedienungsperson von vorne die Spitze 19 beobachten.

Am hinteren Ende verläuft der Schneidezahnführungsstift 17 mit seinem vertikalen Abschnitt 17B senkrecht nach unten durch die Aussparung 18 in der oberen Modelltragplatte 3. Das untere Ende des vertikalen Abschnittes 17B ist fest mit dem Querträger 22 oder einem an diesem angeordneten Teil verbunden.

Für eine entsprechende Beweglichkeit zwischen dem Unterkiefermodell und dem Oberkiefermodell 6 können die beiden Abschnitte 17A und 17B durch ein Gelenk 38 miteinander verbunden sein. Ein Bügel 45 der im vorderen Bereich des Abschnittes 17A über diesem liegt, verhindert ein Hochschnappen des Schneidezahnführungsstiftes.

Der vertikale Abschnitt 17B des Schneidezahnführungsstiftes 17 kann teleskopartig ausgebildet sein, damit vertikale Längenänderungen während einer Führung des Schneidezahnführungsstiftes 17 möglich sind. Hierzu kann man in üblicher Weise zwei Rohre ineinanderstecken, wobei ggf. noch eine Rückstellfeder vorhanden sein kann (nicht dargestellt). Auf dem horizontalen Abschnitt 17A des Schneidezahnführungsstiftes 17 kann eine Griffleiste bzw. Griffschale 23 befestigt sein. Auf diese Weise kann das Unterkiefermodell 7 statt einer Betätigung an den beiden Hebeln 11 auch über die Griffleiste 23 bewegt werden, wobei die Spitze 19 des Schneidezahnführungsstiftes 17 in bekannter Weise auf der Kurvenbahn 21 des Führungstellers 20 läuft. Gleichzeitig ist das Unterkiefermodell nach wie vor gezwungen, auf der Kurvenbahn 14

-...-

der Gelenkgrube 15 zu folgen. (siehe Pfeil B in Fig. 4).

Zum Zwecke einer leichteren Zugänglichkeit können die beiden Träger 2 über ein nicht näher dargestelltes Kippgelenk 24 nach hinten kippbar mit der Grundplatte 1 verbunden sein. Das Kippgelenk 24 kann - wie in der Fig. 1 dargestellt - auf der Unterseite sein. Selbstverständlich ist jedoch auch eine Anordnung auf der Oberseite zwischen den beiden Trägern 2 und der oberen Modelltragplatte 3 möglich (in der Fig. 2 strichpunktiert dargestellt).

Im vorderen Bereich der oberen Modelltragplatte 3 kann sich in der Mitte eine Bohrung befinden (Fig.1), durch die ein Fixierstift 40 zur Wiederfindung der Kauebene bei totalen oder partiellen Prothesen einsteckbar ist. Hierzu weist der Fixierstift 40 eine horizontale Spitze auf der Unterseite und eine Skalenangabe im Bereich der oberen Modelltragplatte 3 auf. Zum Festklemmen des höheneinstellbaren Fixierstiftes 40 dient eine Feststellschraube 42 in der oberen Modelltragplatte 3, die zur Sicherung gegen ein Verdrehen des Fixierstiftes 40 in eine in Längsrichtung verlaufende Führungsrille 41 des Fixierstiftes 40 ragt.

In der vorderen Stirnseite der oberen Modelltragplatte 3 kann auch eine Vierkantbohrung 46 angeordnet sein (siehe Fig. 6), in die ein Adapter 47 mit einem oberen horizontalen Teil 50 einsteckbar ist. Der Adapter 47 besitzt weiterhin einen vertikalen Stab 49 und ein unteres horizontales Teil 48 auf. Durch Schrauben und Gelenke sind die beiden horizontalen Abschnitte 48 bzw. 50 einstellbar. Am vorderen Ende des horizontalen Teiles 48 ist ein Funktionsabdrucklöffel 51 befestigbar. Dieser Adapter war vorher an einem Gesichtsbogen befestigt worden, mit welchem der Zahnarzt die persönlichen Koordinaten (Höhe des Kiefergelenkes, Breiteneinstellung usw.) des Patienten festgestellt hatte. Der Adapter 50 wurde anschließend von dem Gesichtsbogen abgenommen und dann zusammen mit dem Funktionsabdrucklöffel zu dem Zahntechniker gebracht, der den Zahnersatz herstellen soll. Dort wird der Funktionsabdrucklöffel 51 mit Gips ausgegossen und auf diese Weise ein Gipsmodell hergestellt. Abschließend wird der Adapter 50 mit seinem horizontalen Teil 50 in die Vierkantbohrung 46 eingesteckt. Da das Artikulatoroberteil, d.h. die Modelltragplatte 3, dem beim Zahnarzt verwendeten Gesichtsbogen entspricht, an dem der Adapter zur Einstellung befestigt war, gelangt der vorher mit dem Funktionsabdrucklöffel 51 gemachte Gipsabdruck in die genaue Position und das Oberkiefermodell 6 kann durch Anziehen der Schraube 5 exakt fixiert werden.

Statt einer kugelförmigen Ausgestaltung des oberen Endes des Führungsarmes 10 als Kopf 13, der auf der Laufbahn 14 der Gelenkgrube 15 geführt ist, ist selbstverständlich im Rahmen

-...-

der Erfindung auch die kinematische Umkehrung möglich. Dies bedeutet die Gelenkgrube 15 ist jeweils statt an dem Träger bzw. der oberen Modelltragplatte 3 in die oberen Enden der beiden Führungsarme 10 eingeformt. In diesem Falle sind an den beiden Trägern 2 oder an der Modelltragplatte 3 Kugelköpfe angeformt, welche auf den Laufbahnen 14 in den Gelenkgruben 15 der Führungsarme 10 geführt sind.

In der Fig. 7 ist eine andere kinematische Umkehrung der Anordnung der Gelenkgruben 15 in einer Ansicht von vorne dargestellt. Statt daß der Kugelkopf 13 von unten her auf der Laufbahn 14 geführt ist (wie in den Fig. 4 und 5) ist nach der Fig. 7 die Gelenkgrube spiegelbildlich nach unten geklappt. Auf diese Weise läuft jeweils der am oberen Ende des Führungsarmes 10 angebrachte Kugelkopf 13 auf der Laufbahn 14 der Gelenkgrube 15, die, wie bei der Ausführung nach Fig. 4, über eine Schraube 26 und einen Stift 27 schwenkbar an dem Querbalken 43 der oberen Modelltragplatte 3 befestigt ist. Auf diese Weise gibt es keine Probleme mit der Schwerkraft bzw. dem Gewicht der unteren Modelltragplatte 9 und den Führungsarmen 10.

0170806

PATENTANWALT                    Fasanenstraße 7

DIPL.-ING. WERNER LORENZ        D-7920 Heidenheim

04.04.1985 - hf

Akte: KOE 1290-AI

Anmelder:

=========

Rudi Körner                    _ 1 _

Elisabethenstraße 41

7080 Aalen-Unterkochen


P a t e n t a n s p r ü c h e


1. Artikulator zur Anfertigung einer Zahnprothese mit auf
Modelltragplatten befestigten Unterkiefer- und einem Oberkiefermodellen, die zueinander beweglich an einem Gestell mit
einer Grundplatte befestigt sind,
d a d u r c h  g e k e n n z e i c h n e t , daß
die obere Modelltragplatte (3) für das Oberkiefermodell (6)-
fest an einem mit der Grundplatte (1) über Träger (2) verbundenen Gestelloberteil angeordnet ist und daß die untere Modelltragplatte (9) für das Unterkiefermodell (7) beweglich
mit dem Gestell oder der oberen Modellplatte (3) verbunden
ist, wobei im hinteren Bereich der Modelltragplatte (9) an

-...-

beiden Seiten jeweils ein nach oben ragender Führungsarm (10) angeordnet ist, dessen oberes Ende in einer an dem Gestell oder der oberen Modelltragplatte (3) für das Oberkiefermodell (6) fest angeordneten Gelenkgrube (15) geführt ist.

2. Artikulator nach Anspruch 1,
d a d u r c h  g e k e n n z e i c h n e t , daß
die Modelltragplatte (9) für das Unterkiefermodell (7) im hinteren Bereich über ein elastisches Glied (12) mit dem Gestell oder der oberen Modelltragplatte (3) verbunden ist.

3. Artikulator nach Anspruch 1 oder 2,
d a d u r c h  g e k e n n z e i c h n e t , daß
die Grundplatte im hinteren Bereich mit zwei seitlichen Stützen (2) versehen ist, auf deren oberen Enden sich die obere Modelltragplatte (3), welche frei auskragend nach vorne ragt, mit einem hinteren Querbalken (43) abstützt.

4. Artikulator nach einem der Ansprüche 1 - 3,
d a d u r c h  g e k e n n z e i c h n e t , daß
die beiden Gelenkgruben (15) seitlich an der oberen Modelltragplatte (3) oder einem mit der oberen Modelltragplatte (3) verbundenen Teil befestigt sind.

5. Artikulator nach Anspruch 4,

-...-

0170806

dadurch gekennzeichnet, daß
die Gelenkgruben (15) durch eine Verdreh- und Festklemmeinrichtung (26,27) jeweils um eine vertikale Achse verschwenkbar sind.

6. Artikulator nach Anspruch 6,
dadurch gekennzeichnet, daß
die Verdreh- und Festklemmeinrichtung eine in dem Querbalken
(43) gelagerte und von oben in die Gelenkgrube geschraubte
Einstellschraube (26) und einen vertikalen außerhalb der
Drehachse in der Gelenkgrube (15) befestigten und aus einem
Schlitz (28) des Querbalkens (43) ragenden Anzeigestift (27)
aufweist.

7. Artikulator nach einem der Ansprüche 1-6,
dadurch gekennzeichnet, daß
im hinteren Bereich der Gelenkgrube (15) ein in die Laufbahn
(14) der Gelenkgrube (15) ragendes in horizontaler Richtung
verschiebbares Einstellglied (Einstellschraube 29) angeordnet ist, dessen vorderes, in die Laufbahn ragendes Ende (30)
wenigstens annähernd der Kontur der Laufbahn (14) angepaßt
ist.

8. Artikulator nach einem der Ansprüche 1 - 6,
dadurch gekennzeichnet, daß
auf der oberen Modelltragplatte (3) oder einem damit verbun-

-...-

0170806

denen Teil ein Führungsteller (20) für einen Schneidezahnführungsstift (17) befestigt ist, wobei der Schneidezahnführungsstift (17) durch eine Aussparung (18) in der oberen Modelltragplatte (3) im hinteren Bereich nach unten zu der unteren Modelltragplatte (9) oder einem damit verbundenen Teil (22) geführt ist.

9. Artikulator nach Anspruch 8,
d a d u r c h   g e k e n n z e i c h n e t , daß
der Schneidezahnführungsstift (17) an einem Teil des Querträgers (22) zwischen den beiden Führungsarmen (10) befestigt ist.

10. Artikulator nach Anspruch 8 oder 9,
d a d u r c h   g e k e n n z e i c h n e t , daß
der Schneidezahnführungsstift (17) zwischen seinem horizontalen Abschnitt (17A) und seinem wenigstens annähernd vertikalen Abschnitt (17B) mit einem Gelenk (38) versehen ist.

11. Artikulator nach Anspruch 2,
d a d u r c h   g e k e n n z e i c h n e t , daß
das elastische Glied eine Feder (12) aufweist, die mit einem Ende an einen Teil des Querträgers (22) und die mit dem anderen Ende an dem horizontalen Abschnitt (17A) des Schneidezahnführungsstiftes (17) befestigt ist.

12. Artikulator nach einem der Ansprüche 1 - 11, d a d u r c h   g e k e n n z e i c h n e t , daß zur Anpressung der oberen Enden (Köpfe 13) der Führungsarme (10) an die Laufbahnen (14) der Gelenkgruben eine federartige Einrichtung (25) vorgesehen ist, die zwischen die Führungsarme (10) oder damit verbundene Teile und einem Teil der oberen Modelltragplatte (3) gespannt ist.

13. Artikulator nach Anspruch 12, d a d u r c h   g e k e n n z e i c h n e t , daß die federartige Einrichtung einen Stift, einen Draht, eine Schnur (36) oder dgl. aufweist, der an einem auf der oberen Modelltragplatte (3) oder einem damit verbundenen Teil (43) angeordneten Halteglied (33) befestigt ist, wobei der Stift, der Draht, die Schnur (36) o.dgl. durch je eine Bohrung (32 bzw. 39) in der oberen Modelltragplatte bzw. dem damit verbundenen Teil (3 bzw. 43) und der Gelenkgrube (15) geführt und mit einem verdickten Ende (37) in einer Stufenbohrung (31) in dem Führungsarm (10) befestigt ist, wobei das Halteglied (33) durch eine Feder (25) gegen den Führungsarm (10) vorgespannt ist.

14. Artikulator nach einem der Ansprüche 1 - 13, d a d u r c h   g e k e n n z e i c h n e t , daß im vorderen Bereich der oberen Modelltragplatte (3) ein vertikal nach unten ragender Fixierstift (40) mit einer Spitze

-...-

0170806

zur Wiederfindung der Kauebene angeordnet ist.

15. Artikulator nach einem der Ansprüche 1 - 14,
d a d u r c h   g e k e n n z e i c h n e t , daß
auf  der Vorderseite die obere Modelltragplatte (3) mit einer
Vierkantbohrung (46) versehen ist, in die  ein  Adapter  (47)
mit einem Funktionsabdrucklöffel (51) einsteckbar ist.

-...-

0170806

Fig.1

Fig.4

Fig.5

Fig.2

Fig.3

Fig.6

Fig.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-C- 253 439 (WEISS)<br>* Ganzes Dokument *<br><br>--- | 1-4,12 | A 61 C 11/00 |
| X | US-A-1 989 367 (KEENEY)<br>* Figuren 1,2 *<br><br>--- | 1 | |
| A | US-A-1 622 910 (HOMER)<br>* Seite 1, Zeilen 26-29; Figuren 1,2 *<br><br>--- | 8 | |
| A | DE-A-3 135 122 (MACK)<br>* Seite 1, Zeilen 1-13; Figur 1 *<br><br>--- | 8 | |
| A | DE-C- 413 257 (GYSI)<br>* Seite 1, Zeilen 46-50; Seite 2, Zeilen 3-6; Figur 1 *<br><br>--- | 14 | RECHERCHIERTE SACHGEBIETE (Int. Cl.4) |
| A | EP-A-0 054 600 (BALOGH)<br><br>--- | | A 61 C 11/00 |
| A | US-A-4 189 837 (STELE)<br><br>----- | | |

Der vorliegende Recherchenbericht wurde für alle Patentansprüche erstellt.

| Recherchenort<br>BERLIN | Abschlußdatum der Recherche<br>16-09-1985 | Prüfer<br>SIMON J J P |
|---|---|---|